# EUROPÄISCHE PATENTSCHRIFT

(11) **EP 2 729 227 B1**
(45) Veröffentlichungstag und Bekanntmachung des Hinweises auf die Patenterteilung: **23.11.2016**
(21) Anmeldenummer: 12722330.3
(22) Anmeldetag: 15.05.2012
(51) Int. Cl.: B01D 3/14, B01J 8/00, C01B 21/087, C07F 7/10

(54) **VERFAHREN ZUR HERSTELLUNG VON TRISILYLAMIN AUS MONOCHLORSILAN UND AMMONIAK**
PROCESS FOR THE PREPARATION OF TRISILYLAMINE FROM MONOCHLOROSILANE AND AMMONIA
PROCÉDÉ POUR LA PRODUCTION DE TRISILYLAMINE À PARTIR DE MONOCHLOROSILANE ET D'AMMONIAQUE

(30) Priorität: 06.07.2011 DE 102011078749
(43) Veröffentlichungstag der Anmeldung: 14.05.2014
(73) Patentinhaber: Evonik Degussa GmbH, 45128 Essen (DE)
(72) Erfinder: HOPPE, Carl-Friedrich, 63584 Gründau (DE); RAULEDER, Hartwig, 79618 Rheinfelden (DE); LUNT-RIEG, Ingrid, 61352 Bad Homburg (DE); GÖTZ, Christian, 63500 Seligenstadt (DE)
(86) Internationale Anmeldenummer: PCT/EP2012/059019
(87) Internationale Veröffentlichungsnummer: WO 2013/004423

(56) Entgegenhaltungen:
- WO-A1-2010/141551
- ALFRED STOCK; KARL SOMIESKI: "Siliciumwasserstoffe, X.: Stickstoffhaltige Verbindungen", BER. DTSCH. CHEM. GES., Bd. 54, 1921, Seiten 740-758, XP002680324,
- L.G.L. WARD: "BROMOSILANE, IODOSILANE, AND TRISILYLAMINE", INORGANIC SYNTHESIS, Bd. XI, 1968, Seiten 159-170, XP002680325,

## Beschreibung

Die vorliegende Erfindung betrifft ein Verfahren für die Herstellung von Trisilylamin aus Monochlorsilan und Ammoniak in der Flüssigphase. Die vorliegende Erfindung betrifft ferner eine Anlage, in der ein solches Verfahren durchgeführt werden kann.

Trisilylamin (TSA), N(SiH₃)₃, ist eine leicht bewegliche, farblose, selbstentzündliche und leicht hydrolysierbare Flüssigkeit mit Schmelzpunkt -105,6 °C und Siedepunkt +52 °C. Stickstoffhaltige Siliziumverbindungen wie Trisilylamin sind wichtige Substanzen in der Halbleiterindustrie.

Es ist lange bekannt TSA für die Erzeugung von Siliziumnitrid-Schichten einzusetzen (US 4,200,666, JP 1986-96741). So findet TSA insbesondere Anwendung bei der Chip-Herstellung als Schicht-Präkursor für Siliziumnitrid- oder Siliciumoxynitrid-Schichten. Beispielsweise offenbart EP 1 547 138 ein ganz spezielles Verfahren zur Anwendung von TSA. Aufgrund der Anwendung in der Chip-Herstellung ist es wichtig, Trisilylamin sicher, störungsfrei und konstant in der erforderlichen, in der Regel hochreinen Qualität herstellen zu können.

Trisilylamin lässt sich aus Monochlorsilan und Ammoniak gemäß folgender Gleichung

3 H₃SiCl + 4 NH₃ → N(SiH₃)₃ + 3 NH₄Cl (1)

herstellen. Nebenprodukt der Umsetzung ist Ammoniumchlorid. Die Reaktion von Monochlorsilan und Ammoniak ist eine spontane, exotherme Reaktion.

Alfred Stock und Karl Somieski beschreiben in Ber. Dtsch. Chem. Ges. 54, 740 ff., 1921, die sofortige Umsetzung von Monochlorsilangas und Ammoniakgas bei Raumtemperatur gemäß Gleichung (1). Die Reaktion läuft mit überschüssigem Monochlorsilan unter quantitativer Bildung von Trisilylamin ab. Als Nebenprodukt scheidet sich Ammoniumchlorid ab.

In der WO 2010/141551 wird die Umsetzung von Monochlorsilan mit Ammoniak in der Gasphase beschrieben.

Ferner lehrt WO 2011/049811, die Produktion von Silylaminen möglichst nahe am Ort der Verwendung durchzuführen, um den Lieferweg und damit die Lieferzeit kurz zu halten. Gemäß WO 2011/049811 kann die Herstellung von TSA-haltigen Silylaminen aus Monochlorsilan und Ammoniak sowohl in der Gas- als auch in der Flüssig-Phase erfolgen.

Bereits Richard L. Wells und Riley Schaeffer beschreiben in J. Am. Chem. Soc. 88, 37 ff., 1966, die Umsetzung von Monochlorsilan mit Ammoniak, indem eine Mischung der beiden Stoffe von -196 °C auf Raumtemperatur erwärmt wird. Neben der Trisilylamin-Bildung gemäß Gleichung (1) wird der Ablauf von Folgereaktionen beobachtet:

3 (SiH₃)₃N + n NH₃ → 3 SiH₄ + n NH₃ + (SiH₃NSiH₂)₃ (2)

(SiH₃NSiH₂)₃ + x NH₃ → y SiH₄ + z NH₃ + "polymeric material" (3)

So kann Trisilylamin in Gegenwart von Ammoniak zu Monosilan (SiH₄) und N,N',N"-Trisilylcyclotrisilazan (SiH₃NSiH₂)₃ sowie polymerem Material ("polymeric material") weiterreagieren. Die Folgereaktionen (2) und (3) wirken sich nachteilig auf die Ausbeute an Trisilylamin aus.

Der vorliegenden Erfindung lag somit die Aufgabe zugrunde, eine technische und möglichst wirtschaftliche Lösung zur Herstellung von Trisilylamin aus Ammoniak und Monochlorsilan in der Flüssigphase bereitzustellen, die innerhalb einer mehrstufigen Anlage die Produktströme so vernetzt, dass die eingesetzten Edukte möglichst effizient zur Herstellung des Endprodukts Trisilylamin genutzt werden.

Diese Aufgabe wird erfindungsgemäß entsprechend den Merkmalen in den Patentansprüchen gelöst. So werden nachfolgend ein erfindungsgemäßes Verfahren sowie eine erfindungsgemäße Anlage, in der ein solches Verfahren vorteilhaft durchgeführt werden kann, einschließlich bevorzugter Ausführungsformen beschrieben.

So wurde in überraschender Weise gefunden, dass man vorteilhaft Monochlorsilan (A sowie A') in einem Reaktor (1) flüssig vorlegt und Ammoniak (B) in die Vorlage einleitet und man ein Produktgemisch enthaltend TSA und NH₄Cl, das in fester Form vorliegt, erhält. Anschließend führt man das so erhaltene Produktgemisch aus Reaktor (1) über eine Filtereinheit (2), wobei festes Ammoniumchlorid (C) aus dem Produktgemisch abgetrennt wird. Nachfolgend führt man das Filtrat in die Destillationskolonne (3), in der man überschüssiges Monochlorsilan (A') über Kopf destilliert, kondensiert und wieder dem Reaktor (1) flüssig zuführt. Ferner kann Monosilan (D) über den Kopf der Destillationskolonne (3) abgeführt werden. Den Sumpf (E) der Kolonne (3) fördert man in die Destillationskolonne (4), in der man das Produkt Trisilylamin (G) über Kopf destilliert und kondensiert. Höher siedende Stoffe werden über den Sumpf (F) ausgeschleust.

Das zuvor beschriebene Verfahren kann sowohl batchweise als auch kontinuierlich durchgeführt werden und ermöglicht so in vorteilhafter Weise die Herstellung von sehr reinem TSA.

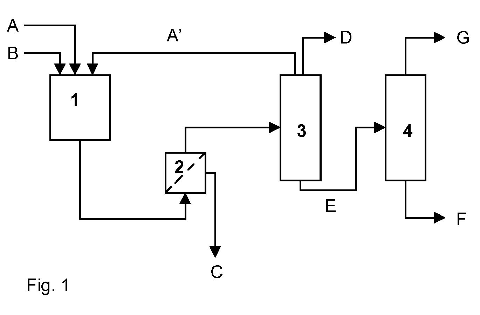

Figur 1 gibt eine bevorzugte Ausführungsform eines Prozessschemas für das erfindungsgemäße Verfahrens sowie eine erfindungsgemäße Anlage wieder. Gegenstand der vorliegenden Erfindung ist somit ein Verfahren zur Herstellung von Trisilylamin in der Flüssigphase, indem man
- Monochlorsilan (A bzw. A') in einem Reaktor (1) flüssig vorgelegt und
- Ammoniak (B) in die Vorlage einleitet,
- die Umsetzung in Reaktor (1) durchführt,
- anschließend das so erhaltene Produktgemisch aus Reaktor (1) in und durch eine Filtereinheit (2) führt und festes Ammoniumchlorid (C) aus dem Produktgemisch abtrennt und
- das Filtrat aus der Filtereinheit (2) in die Destillationskolonne (3) führt,
- in Destillationskolonne (3) überschüssiges Monochlorsilan (A') über Kopf destilliert, kondensiert und dem Reaktor (1) flüssig zuführt sowie
- gasförmige Stoffe (D), wie Monosilan, über den Kopf der Destillationskolonne (3) abführt und
- den Sumpf (E) in die Destillationskolonne (4) fördert,
- in der Destillationskolonne (4) das Produkt Trisilylamin (G) über Kopf destilliert und kondensiert und
- höher siedende Stoffe über den Sumpf (F) ausschleust.

Dabei führt man die Umsetzung bevorzugt unter Schutzgas, beispielsweise Stickstoff und / oder einem Edelgas, und Abwesenheit von Sauerstoff und Wasser (Feuchte) durch, wobei man die vorliegende Anlage vor dem ersten Befüllvorgang geeigneterweise trocknet und mit Schutzgas spült.

Auch sind die erfindungsgemäß verwendeten Anlagenteile, die mit hier auftretenden Stoffen in Berührung kommen, vorteilhaft aus rostfreiem Stahl ausgeführt und geregelt kühl- bzw. beheizbar.

Beim erfindungsgemäßen Verfahren setzt man die Komponente (A bzw. A') bezüglich der Komponente (B) bevorzugt in einem molaren Überschuss ein, wobei man den Reaktor (1) zur Durchführung der Umsetzung geeigneterweise bis zu 99 %, vorzugsweise von 5 bis 95 %, besonders vorzugsweise von 20 bis 80 % des Reaktorvolumens mit Reaktionsgemisch der Komponenten (A) und (B) sowie von der Destillationskolonne (3) zurückgeführtem (A') füllt. Vorteilhaft legt man dazu Monochlorsilan in flüssiger Form vor und leitet Ammoniak ein. Dabei kann man Ammoniak gasförmig und/oder flüssig dosieren. Ferner kann man dem Ammoniakstrom ein gasförmiges, vorzugsweise inertes Verdünnungsmittel, wie Stickstoff, vorteilhaft zusetzen.

Darüber hinaus ist es vorteilhaft bei der Durchführung des erfindungsgemäßen Verfahrens, insbesondere beim Befüllen des Reaktors sowie bei Umsetzung der Komponenten, den Reaktorinhalt zu mischen. So kann man das Reaktions- bzw. Produktgemisch im Reaktor (1) beispielsweise rühren.

Die Umsetzung in Reaktor (1) führt man erfindungsgemäß bei einer Temperatur von -60 bis +40 °C, vorzugsweise bei -15 bis +15 °C, besonders bevorzugt -10 bis +10 °C, ganz besonders bevorzugt -5 bis +5 °C, durch.

Ferner stellt sich bei der Umsetzung im Reaktor durch die Vorlage von flüssigem Monochlorsilan und Zugabe von Ammoniak im Wesentlichen der Dampf/Flüssig-Gleichgewichtsdruck einer entsprechenden Mischung von Monochlorsilan, Ammoniak und des entstehenden TSAs sowie gegebenenfalls anteiliger Nebenprodukte ein.

Weiter ist Gegenstand der vorliegenden Erfindung eine Anlage, in der man das erfindungsgemäße Verfahren durchführen kann, wobei die Anlage umfasst
- einen Reaktor (1) mit den jeweiligen Zuführungen für die Edukte bzw. Komponenten (A), (A') und (B) und einem Auslass für Produktgemisch, der in eine dem Reaktor (1)
- nachgeschalteten Filtereinheit (2) mündet, wobei diese einerseits mit einem Feststoffauslass für Komponente (C) ausgestattet ist und andererseits mit einer Leitung zur Förderung des Filtrats aus der Einheit (2) in
- eine nachfolgende Destillationseinheit ausgestattet ist, die aus mindestens zwei Destillationskolonnen (3) und (4) besteht und die Destillationskolonne (3) mit einem Auslass über Kopf für einen gasförmigen Stoffstrom (D) und einem Auslass über Kopf mit Rückleitung für kondensiertes Monochlorsilan (A') in den Reaktor (1) sowie mit einer Leitung zur Überführung von Sumpf (E) aus der Destillationskolonne (3) in die nachfolgende Destillationskolonne (4) zur Gewinnung von Trisilylamin (G) und Ausschleusung von Sumpf (F) ausgestattet ist.

Das erfindungsgemäße Verfahren führt man im Allgemeinen in einer erfindungsgemäßen Anlage durch, indem flüssiges Monochlorsilan (A bzw. A') und Ammoniak (B) einem Reaktor (1) zugeführt und geeigneterweise gemischt werden, wobei ein Produktgemisch enthaltend TSA und festes NH₄Cl entsteht. Das Produktgemisch wird anschließend über eine Filtereinheit (2) geleitet, in der festes Ammoniumchlorid (C) abgetrennt wird. Das Filtrat aus der Filtereinheit (2) wird einer Destillationskolonne (3) zugeführt, in der überschüssiges Monochlorsilan (A') über Kopf destilliert, kondensiert und wieder dem Reaktor (1) flüssig zugeführt, d. h. recycliert wird. Weiterhin kann Monosilan (D) über den Kopf der Destillationskolonne (3) abgezogen werden. Der Sumpf (E), der in der Regel TSA sowie höher siedende Stoffe enthält, wird in die Kolonne (4) gefördert, in der sehr reines Trisilylamin (G) über Kopf destilliert, kondensiert und abgezogen werden kann. Höher siedende Stoffe (F) können über den Sumpf der Kolonne (4) ausgeschleust werden.

So ermöglicht die vorliegende Erfindung in einfacher und wirtschaftlicher Weise Trisilylamin in technischen Mengen und sehr guter Qualität herzustellen.

### Bezugszeichenliste

- (1): Reaktor
- (2): Filtereinheit
- (3): Destillationskolonne
- (4): Destillationskolonne
- (A): Monochlorsilan
- (A'): Monochlorsilan, recycliert
- (B): Ammoniak
- (C): Ammoniumchlorid
- (D): gasförmige Stoffe über Kopf aus (3), u. a. Monosilan
- (E): Überführung von Sumpf aus (3) nach (4)
- (G): Trisilylamin
- (F): Sumpf aus (4)

## Patentansprüche

1. Verfahren zur Herstellung von Trisilylamin in der Flüssigphase,
indem man
- Monochlorsilan (A bzw. A') in einem Reaktor (1) flüssig vorgelegt und
- Ammoniak (B) in den Reaktor (1) einleitet,
- die Umsetzung in Reaktor (1) durchführt,
- anschließend das so erhaltene Produktgemisch aus Reaktor (1) in und durch eine Filtereinheit (2) führt und festes Ammoniumchlorid (C) aus dem Produktgemisch abtrennt und
- das Filtrat aus der Filtereinheit (2) in die Destillationskolonne (3) führt,
- in Destillationskolonne (3) überschüssiges Monochlorsilan (A') über Kopf destilliert, kondensiert und dem Reaktor (1) flüssig zuführt sowie
- gasförmige Stoffe (D) über den Kopf der Destillationskolonne (3) abführt und
- den Sumpf (E) in die Destillationskolonne (4) fördert,
- in der Destillationskolonne (4) das Produkt Trisilylamin (G) über Kopf destilliert und kondensiert und
- höher siedende Stoffe über den Sumpf (F) ausgeschleust.

2. Verfahren nach Anspruch 1,
**dadurch gekennzeichnet,**
**dass** man die Komponente (A bzw. A') bezüglich der Komponente (B) in einem molaren Überschuss einsetzt.

3. Verfahren nach Anspruch 1 oder 2,
**dadurch gekennzeichnet,**
**dass** man den Reaktor (1) zur Durchführung der Umsetzung bis zu 99 % des Reaktorvolumens mit Reaktionsgemisch der Komponenten (A, A') und (B) füllt.

4. Verfahren nach mindestens einem der vorangehenden Ansprüche,
**dadurch gekennzeichnet,**
**dass** man die Umsetzung in Reaktor (1) bei einer Temperatur von -60 bis +40 °C durchführt.

5. Verfahren nach mindestens einem der vorangehenden Ansprüche,
**dadurch gekennzeichnet,**
**dass** man das Verfahren batchweise oder kontinuierlich durchführt.

6. Anlage für die Umsetzung zumindest der Edukte Monohalogensilan (A, A') und Ammoniak (B) in der Flüssigphase unter Bildung eines flüssigen Produktgemisches zur Herstellung von Trisilylamin umfassend
- einen Reaktor (1) mit den Zuführungen für die Komponenten (A), (A') und (B) und einem Auslass für Produktgemisch, der in eine dem Reaktor (1)
- nachgeschaltete Filtereinheit (2) mündet, wobei diese einerseits mit einem Feststoffauslass für Komponente (C) ausgestattet ist und andererseits mit einer Leitung zur Förderung des Filtrats aus der Einheit (2) in
- eine nachfolgende Destillationseinheit ausgestattet ist, die aus mindestens zwei Destillationskolonnen (3) und (4) besteht und die Destillationskolonne (3) mit einem Auslass über Kopf für einen gasförmigen Stoffstrom (D) und mit einem Auslass über Kopf mit Rückleitung für kondensiertes Monochlorsilan (A') in den Reaktor (1) sowie mit einer Leitung zur Überführung von Sumpf (E) aus der Destillationskolonne (3) in die nachfolgende Destillationskolonne (4) zur Gewinnung von Trisilylamin (G) und Ausschleusung von Sumpf (F) ausgestattet ist.

## Claims

1. Process for production of trisilylamine in the liquid phase,
which process comprises
- initially charging monochlorosilane (A or A') to a reactor (1) in liquid form and
- passing ammonia (B) into the reactor (1),
- performing the reaction in reactor (1),
- subsequently passing the resulting product mixture from reactor (1) into and through a filter unit (2) and removing solid ammonium chloride (C) from the product mixture and
- passing the filtrate from the filter unit (2) into the distillation column (3),
- excess monochlorosilane (A') being distilled in distillation column (3) overhead, condensed and fed to reactor (1) in liquid form, and also
- removing gaseous substances (D) from the distillation column (3) overhead and
- conveying the bottoms (E) into the distillation column (4),
- the product trisilylamine (G) being distilled in the distillation column (4) overhead and condensed and
- removing higher boilers from the system via the bottoms (F).

2. Process according to Claim 1,
**characterized in that**
component (A or A') is used in a molar excess relative to component (B).

3. Process according to Claim 1 or 2,
**characterized in that**
the reactor (1) is filled with the reaction mixture of components (A, A') and (B) up to 99% of the reactor volume to perform the reaction.

4. Process according to at least one of the preceding claims,
**characterized in that**
the reaction in reactor (1) is carried out at temperature of -60 to +40°C.

5. Process according to at least one of the preceding claims,
**characterized in that**
the process is carried out batchwise or continuously.

6. Plant for reacting at least the reactants monohalosilane (A, A') and ammonia (B) in the liquid phase to form a liquid product mixture for production of trisilylamine comprising
- a reactor (1) with inlets for the components (A), (A') and (B) and a product mixture outlet leading into a
- filter unit (2) downstream of reactor (1), this filter unit (2) being equipped with a solids outlet for component (C) and with a line for conveying the filtrate from the unit (2) into
- a subsequent distillation unit which consists of at least two distillation columns (3) and (4) and the distillation column (3) is equipped with an outlet overhead for a gaseous stream (D) and with an outlet overhead with return line for condensed monochlorosilane (A') into the reactor (1) and also with a line for transferring bottoms (E) from the distillation column (3) into the subsequent distillation column (4) to recover trisilylamine (G) and remove bottoms (F) from the system.

## Revendications

1. Procédé de préparation de trisilylamine en phase liquide, dans lequel
- on place à l'état liquide dans un réacteur (1) du monochlorosilane (A ou A'), et
- on introduit de l'ammoniac (B) dans le réacteur (1),
- on met en oeuvre la réaction dans le réacteur (1),
- puis on introduit le mélange de produits ainsi obtenu, provenant du réacteur (1), dans et à travers une unité de filtration (2), et on sépare du mélange de produits le chlorure d'ammonium solide (C), et
- on envoie dans la colonne de distillation (3) le filtrat provenant de l'unité de filtration (2),
- on distille en tête de la colonne de distillation (3) le monochlorosilane (A') en excès, on le condense et on l'envoie à l'état liquide dans le réacteur (1), et
- on évacue les substances gazeuses (D) en tête de la colonne de distillation (3), et
- on envoie le fond (E) dans la colonne de distillation (4),
- on distille le produit trisilylamine (G) en tête de la colonne de distillation (4) et on le condense, et
- on évacue par le fond (F) les substances à haut point d'ébullition.

2. Procédé selon la revendication 1, **caractérisé en ce qu'**on utilise le composant (A ou A') selon un excès molaire par rapport au composant (B).

3. Procédé selon la revendication 1 ou 2, **caractérisé en ce que**, pour mettre en oeuvre la réaction, on remplit du mélange réactionnel des composants (A, A') et (B) le réacteur (1) jusqu'à 99 % du volume du réacteur.

4. Procédé selon au moins l'une des revendications précédentes, **caractérisé en ce qu'**on met en oeuvre la réaction dans le réacteur (1) à une température de -60 à +40°C.

5. Procédé selon au moins l'une des revendications précédentes, **caractérisé en ce qu'**on met en oeuvre le procédé d'une manière discontinue ou continue.

6. Installation pour la réaction d'au moins les matières de charge monohalogénosilane (A, A') et ammoniac (B) en phase liquide, avec formation d'un mélange liquide de produits, pour la préparation de trisilylamine, comprenant :
- un réacteur (1), avec les amenées pour les composants (A), (A') et (B) et une évacuation pour le mélange des produits, qui débouche
- dans une unité de filtration (2), en aval du réacteur (1), cette unité de filtration étant équipée d'une part d'une évacuation de matières solides pour le composant (C), et d'autre part d'une conduite pour envoyer le filtrat provenant de l'unité (2)
- dans une unité de distillation en aval, qui est constituée d'au moins deux colonnes de distillation (3) et (4), et la colonne de distillation (3) est équipée d'une évacuation en tête pour un courant (D) de substances gazeuses et d'une évacuation en tête avec conduite de retour pour le monochlorosilane condensé (A') dans le réacteur (1), ainsi que d'une conduite pour envoyer le fond (E) provenant de la colonne de distillation (3) dans la colonne de distillation (4) en aval, pour obtenir la trisilylamine (G), et évacuation par le fond (F).
